# EUROPEAN PATENT SPECIFICATION

(11) **EP 2 539 611 B1**
(45) Date of publication and mention of the grant of the patent: **02.04.2014**
(21) Application number: 11705245.6
(22) Date of filing: 22.02.2011
(51) Int. Cl.: F16H 61/664

(54) **VARIATOR TRACTION CONTROL ARRANGEMENT**
STEUERANORDNUNG FÜR VARIATORZUGKRAFT
AGENCEMENT D'ANTIPATINAGE A L'ACCELERATION POUR VARIATEUR

(30) Priority: 23.02.2010 GB 201003027
(43) Date of publication of application: 02.01.2013
(73) Proprietor: Torotrak (Development) Limited, Leyland, Lancashire PR26 7UX (GB)
(72) Inventor: FULLER, John William Edward, Preston, Lancashire PR1 BDX (GB)
(74) Representative: Geary, Stephen
(86) International application number: PCT/GB2011/050339
(87) International publication number: WO 2011/104532

(56) References cited:
- EP-A2- 0 959 269
- WO-A1-97/40282
- WO-A1-02/079675
- WO-A1-2005/015061
- US-A- 6 030 310

## Description

The present invention relates to control of traction load in a continuously variable transmission device ("variator") of rolling traction type.

A variator is a device having a rotary input, a rotary output, and a mechanism for transmitting drive from one to the other while providing for continuous (stepless) variation of the ratio of input speed to output speed.

In a rolling traction variator, drive is transmitted between an input race and an output race through at least one roller (and more typically a set of rollers) running upon both races. To provide traction between rollers and races they must be biased into engagement with each other. The biasing force is referred to herein as the "traction load". In known variators the rollers and races do not make contact with each other since they are separated by a thin film of "traction fluid". It is shearing of this fluid which provides the requisite roller/race traction.

Control of traction load is important to variator performance. One reason for this is that energy losses taking place at the roller/race interface vary with traction load, which thus has a bearing on variator efficiency. These losses are due to (1) spin at the interface - i.e. rotation of one surface relative to the other, due to the fact that the two surfaces are following circular paths about different axes and (2) shear at the interface - i.e. speed difference between the two surfaces, producing the shear in the fluid. It is found that excessively high traction loads increase spin losses while low traction loads lead to high shear losses, optimal efficiency lying between the two extremes. Another reason why control of traction load control is important is that excessive slip of rollers relative to the races, caused by inadequate traction loading, can result in premature wear or even failure of the variator.

It is known to vary traction load in sympathy with "reaction force". To explain first of all what reaction force is, consider that due to the torque being transmitted the races exert a tangential force upon each of the rollers. This force must be reacted back to the transmission casing. In known rolling traction variators the rollers are typically movably mounted and the force exerted by the races is opposed by, and reacted to the casing through, an actuator acting upon the roller's mountings. The reaction force applied by the actuator is adjustable for the purpose of controlling the variator and is equal but opposite to the tangential force exerted by the races.

The variator's traction coefficient can be defined as reaction force halved (since there are two contacts) and divided by traction load. Strictly this is a simplification, since the true coefficient of traction at the roller/race interface depends upon the magnitude of the forces perpendicular and parallel to the interface, and the traction load is not generally perpendicular to the interface. However this simple definition will suffice for the present discussion.

An example of a variator whose traction load is varied along with reaction force to provide a constant traction coefficient is provided by Torotrak (Development) Ltd's International patent application PCT/GB97/00938, published as WO97/40292, wherein reaction force is provided by double acting hydraulic roller actuators and the two pressures applied to the actuators are also led to a hydraulic traction load actuator. The hydraulic coupling of roller and traction load actuators is advantageous because it allows the traction load to be very quickly varied along with reaction force. This is important in responding to "torque spikes" - rapid fluctuations in transmission torque occurring due to factors external to the transmission, such as emergency braking of the vehicle. A torque spike produces a rapid change in reaction force which could lead to slip between rollers and races, were if not for the fact that, in the known arrangement, increased pressures which are created in the roller actuators are passed on to the traction load actuator to correspondingly increase traction load with little time lag.

To increase still further the speed of response of the traction load to the reaction force, Torotrak (Development) Ltd's International patent application PCT/GB02/01551, published under No. WO 021079675, teaches how pressure from the roller actuators can be used to control a pilot operated valve which in its turn controls application of fluid from a high pressure source to the traction load actuator. The same document recognises the desirability of adjusting the traction coefficient and provides some ways in which this can be achieved.

It is advantageous to provide for adjustment of the traction coefficient - i.e. for varying the constant of proportionality between reaction force and traction load - because the properties of the traction fluid (specifically its viscosity), and consequently the optimal traction coefficient, vary with temperature. It may also be advantageous to adjust the traction coefficient with variator rolling speed and with variator ratio. Providing a practical means for adjusting the traction coefficient, whilst still providing the desired linear relationship between traction load and reaction force, is challenging, at least if continuous adjustment is required.

Torotrak (Development) Ltd's International Patent Application PCT/GB2004/002500, published under No. WO2005/015061, which constitutes the closest prior art describes an arrangement in which the traction coefficient is variable in a discrete (step-wise) manner, by switching on/off supply of hydraulic pressure signals applied either to the actuator which provides the traction load, or to a pilot controlled valve which sets hydraulic pressure applied to the actuator. A practical implementation of the valve arrangement disclosed in that application is thought to be potentially problematic and/or expensive to manufacture.

In accordance with a first aspect of the present invention, there is a traction control arrangement for a variator having a pair of races, at least one roller which is arranged to engage both races and to transfer drive from one race to the other, the roller being movable to enable the speed of one race to be varied relative to the speed of the other race, a hydraulic traction load actuator which receives a hydraulic traction load pressure and in response urges the races and the rollers into engagement to provide traction between them, and at least one hydraulic roller control actuator arranged to receive opposed first and second reaction pressures and in response to apply a reaction force to the roller, the traction control arrangement comprising a traction control valve which controls the traction load pressure and which is operable in at least two modes:
a first mode in which it receives (a) a first pilot pressure signal corresponding to the traction load pressure and (b) a second pilot pressure signal corresponding to the higher of the first and second reaction pressures, and in which it controls the traction load pressure in response to the difference between the first and second pilot pressure signals; and
a second mode in which it receives (a) a first pilot pressure signal corresponding to the traction load pressure, (b) a second pilot pressure signal corresponding to the higher of the first and second reaction pressures, and (c) a third pilot pressure signal corresponding to the lower of the first and second reaction pressures, and in which it controls the traction load pressure as a function of the first, second and third pilot pressure signals,
a relationship between traction load pressure and reaction force being different in the two modes.

The invention can be implemented using a simple and economical valve arrangement, and can provide linear variation of traction load with reaction pressure as well as adjustment of the traction coefficient.

Preferably the traction control valve has a valve member which is movable to open and close a connection between a traction load supply port and a pressure source, thereby to control the traction load pressure. The valve member may be a valve spool housed in bore of a valve body, but for example it may instead be a movable sleeve.

Still more preferably the traction control valve further comprises a dart which is movable independently of the valve member but is arranged, when subject to suitable hydraulic pressure, to apply a force to the valve member to influence its position.

The dart preferably has first and second working faces which, in the second mode, are subject respectively to the lower and the higher of the first and second reaction pressures so that the dart applies to the valve member a force which is a function of the said reaction pressures.

Preferably the valve member has first and second opposed valve member working faces, and in the first mode the traction load pressure acts upon the first valve member working face and the higher of the first and second reaction pressures acts upon the second valve member working face.

Preferably the dart has first and second opposed working faces, and in the second mode the traction load pressure acts upon the first valve member working face, the lower of the first and second reaction pressures acts upon the second valve member working face, and the first and second working faces of the dart are subject respectively to the lower and the higher of the first and second reaction pressures, so that the dart applies to the valve member a force which is a function of the said reaction pressures.

Preferably the first and second working faces of the dart have equal areas so that the force applied by the dart is proportional to the difference between the first and the second reaction pressures.

It may be desirable to provide more than two possible values of traction coefficient. In a preferred embodiment, the traction control valve additionally comprises a second dart and the traction control arrangement is operable in a third mode to provide a third alternative relationship between traction load pressure and reaction force.

As noted above, the roller control actuators used to apply the reaction force to the variator rollers typically receive two hydraulic pressures, acting in mutual opposition, so that the reaction force is determined by the difference between the two pressures. It has been found to be advantageous to maintain both reaction pressures at a level above atmospheric pressure. The two reaction pressures can then be referred to as a base pressure, maintained at a constant level above atmospheric, and a control pressure which is adjusted to vary reaction force. This creates a difficulty, however, if the traction load pressure is controlled to be proportional to the control pressure without allowance for the base pressure, since the variation of traction load with reaction force will not then have the desired characteristic.

According to a not claimed aspect, there is a traction loading arrangement for a variator comprising a pair of races and at least one roller which is arranged to engage both races and to transfer drive from one race to the other, the roller being movable to enable the speed of one race to be varied relative to the speed of the other, the traction loading arrangement comprising a hydraulic traction load actuator for receiving a hydraulic traction load pressure and in response applying a traction load to urge the races and the rollers into engagement to provide traction between them, and a pre-stressed relief spring which acts in opposition to the traction load actuator to reduce the traction load.

The force exerted by the relief spring can be chosen to restore the desired reaction force/traction load characteristic.

Although it is preferred that traction load should be proportional to reaction force during much of the variator's operation, it is also desirable to ensure that traction load does not fall below a minimum value. In a preferred embodiment, the force of the traction load actuator is reacted through a pre-stressed pre-load spring, so that the pre-load spring prevents the traction load from falling below a minimum value.

Still more preferably the traction load actuator comprises a cylinder, a piston which is movable along the cylinder and which defines a traction load working chamber in it, and an abutment which defines a limit of the piston's movement along the cylinder, so that traction load pressure in the traction load working chamber tends to move the piston along the cylinder, away from the abutment, to apply traction load, the relief spring being pre-stressed between the piston and the cylinder to urge the piston toward the abutment, and the force of the traction load actuator being reacted through a pre-stressed pre-load spring, so that when the traction load pressure falls below a threshold value the piston contacts the abutment and the pre-load spring's force is transmitted through the piston and the abutment to provide the traction load, thereby ensuring that traction load does not fall below a minimum level.

Preferably the pre-load spring reacts the force of the actuator to a variator shaft on which the variator races and the traction load actuator are mounted.

Especially preferred, the cylinder is movable and the piston is formed by a movable reaction plate, a front side of which defines the traction load working chamber and a rear side of which is acted on by the pre-load spring so that the traction load is reacted to the spring through the reaction plate.

According to a not claimed aspect there is a transmission comprising a variator having a pair of races, at least one roller which is arranged to engage both races and to transfer drive from one race to the other, the roller being movable to enable the speed of one race to be varied relative to the speed of the other race, a hydraulic traction load actuator which receives a hydraulic traction load pressure and in response applies a traction load urging the races and the rollers into engagement to provide traction between them, at least one hydraulic roller control actuator arranged to receive opposed base and control pressures and in response to apply a reaction force to the roller, a hydraulic arrangement for generating the base pressure and the control pressure and for maintaining the base pressure above atmospheric pressure, and a traction load pressure control arrangement which controls the traction load pressure as a function of the control pressure, wherein the variator is provided with a pre-stressed relief spring which opposes the action of the hydraulic traction load actuator actuator, reducing the traction load, the relief spring's force being substantially equal to the force applied by the hydraulic traction load actuator when the base and control pressures are equal.

Preferably the hydraulic arrangement comprises a regulator valve for providing the base pressure and maintaining it substantially constant.

Preferably the traction load pressure control arrangement is such as to provide traction load pressure which is proportional to the difference between the base and control pressures.

Specific embodiments of the present invention will now be described, by way of example only, with reference to the accompanying drawings, in which:
Figure 1 is a simplified representation of a toroidal race, rolling traction variator of known type;
Figure 2 is a schematic representation of a hydraulic arrangement for controlling a variator;
Figure 3 is a simplified and partly sectional representation of a traction load actuator embodying aspects of the present invention;
Figures 4a and 4b are schematic representations of a traction load control valve used in the hydraulic arrangement of Figure 2;
Figure 5 is a graph of reaction force against traction load; and
Figure 6 is a schematic representation of a further traction load control valve.

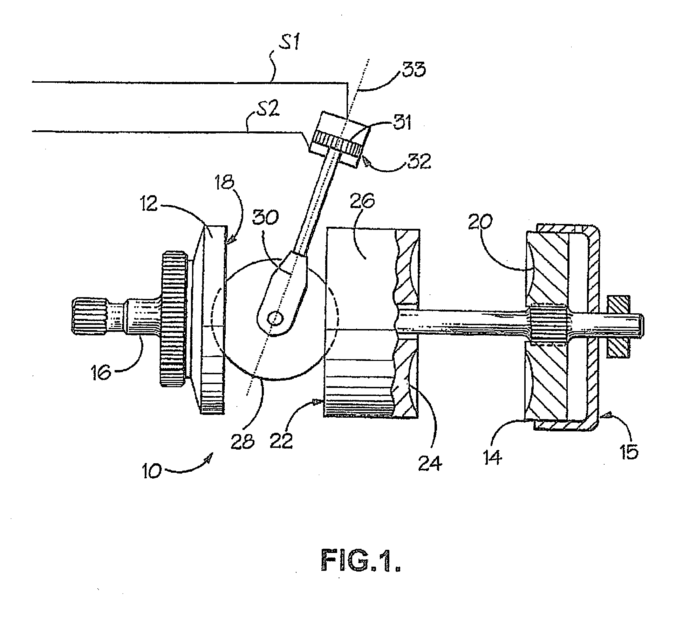

Some principles of operation of a toroidal race, rolling traction variator will be explained with reference to Figure 1. The variator depicted therein belongs to the prior art. Two shaped discs 12, 14 are mounted upon a shaft 16 for rotation therewith and have respective part-toroidal surfaces 18, 20 facing toward corresponding part toroidal surfaces 22, 24 formed upon an inner disc 26, two toroidal cavities being thus defined between the discs. The inner disc 26 is rotatable independently of the shaft 16. Drive from an engine or other prime mover, input via the shaft 16 and outer discs 12, 14, is transferred to the inner disc 26 via a set of rollers 28 disposed in the toroidal cavities. A single roller 28 is illustrated but typically three such rollers are provided in each cavity. The shaft 16 forms the variator's input. The inner disc 26 forms the variator's output. Drive is taken from the inner disc 26 to further parts of the transmission, typically an epicyclic mixer, as is well known in the art.

A traction load applied to outer discs 14 by a hydraulic traction load actuator 15 provides pressure at the contacts between rollers and discs to enable such transfer of drive. The traction load is transmitted through the rollers 28 and the inner disc 26 to the outer disc 12, which is fixed to the shaft and so reacts the load to it, placing the shaft in tension. Each roller is rotatably mounted in a respective carriage 30 which is itself coupled to a hydraulic actuator 32 whereby an adjustable reaction force can be applied to the roller/carriage combination. As well as being capable of translational motion the roller/carriage combination is able to tilt about an axis 33 to change the tilt angle of the roller (the angle that the roller axis makes to the axis of the shaft 16) and so to change the radii at which the roller 28 engages the inner and outer discs 12, 14, 26, thereby allowing variation in the variator transmission ratio, as is well known to those skilled in the art.

The illustrated variator is of the type known in the art as "torque controlled". The variator regulates "reaction torque", which is the torque that must be reacted to the casing to keep the variator from spinning. Equivalently one can say that reaction torque is the sum of the torques exerted by the variator on its rotary input and its rotary output. The hydraulic actuator 32 exerts a controlled reaction force on the roller/carriage and this is balanced by an equal but opposite force upon the roller resulting from the forces transmitted between the disc surfaces 18, 20, 22, 24 and the roller 28. The reaction force is determined by pressure difference in hydraulic lines S1 and S2 leading to opposite sides of actuator piston 31. By setting control pressures P1 and P2 in lines S1 and S2, the variator reaction torque is set. Variator ratio is not set directly, but instead is able to change automatically to accommodate speed changes at the variator's input and output. Changes of speed at the variator input result from a torque imbalance. If the load applied to the engine by the variator is not equal to the engine torque then the speed of the variator input (and of the engine, to which it is coupled) changes at a rate determined by the magnitude of the imbalance, divided by the input inertia. Likewise torque at the variator output goes to drive the vehicle, and the vehicle will accelerate or decelerate accordingly. Changes of vehicle speed are matched by a speed change at the variator output. As the variator's input and/or output speeds change, the rollers 28 automatically move to new positions to suitably vary the variator speed ratio (input speed to output speed) while continuing to provide a reaction torque corresponding to the pressure difference P1-P2.

The pressures P1 and P2 may for example be set using pressure control valves under the direction of an electronic controller. However, external events may also have an effect on P1 and P2, and hence on reaction torque. Consider what happens in the event of a transmission torque spike created for example by hard vehicle braking. The brakes apply a large torque causing the vehicle wheels and consequently the variator output to decelerate. Variator ratio is required to change rapidly, and to achieve this the variator rollers 28 must move quickly. Fluid in the hydraulics is displaced by the rapidly moving pistons 31 of the actuators 32 and resistance to the resulting flow in the hydraulics produces an increase in fluid pressure on one side of each actuator and a reduction on the other side, tending to resist the roller movement. Reaction force can briefly be dramatically increased in a manner which is not initiated nor directly predictable by the transmission's electronic control.

A system is required for varying traction load in sympathy with reaction force, in order to provide a controlled traction coefficient at the roller/drive interface. It needs to react quickly to torque spikes, in order to prevent roller slip, and it needs to allow for the traction coefficient to be changed, for reasons explained above.

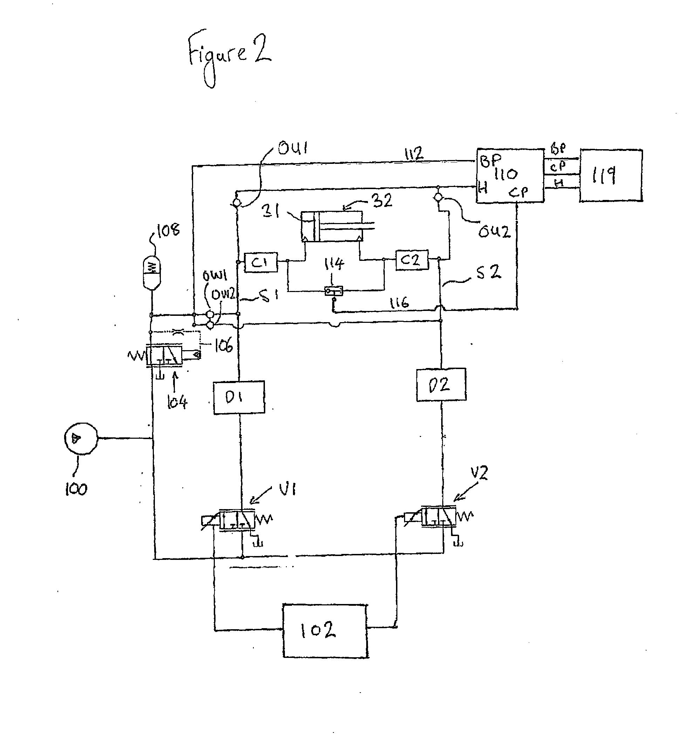

Figure 2 is a schematic and somewhat simplified representation of a hydraulic circuit for controlling reaction force and traction load. In this drawing a single hydraulic actuator 32 is shown but there may be several such actuators in a working variator. Other parts of the variator itself are omitted from Figure 2. The circuit has a pressure source, represented in the drawing simply as a pump 100. A regulator valve or other device (not shown) may be provided to regulate the pump's output pressure. The pump 100 supplies pressurised fluid to a pair of electrically controlled proportional pressure control valves V1 and V2 which output controlled fluid pressures to the supply lines S1 and S2, and as in Figure 1 opposite sides of piston 31 receive the respective reaction pressures P1 and P2 and exert a corresponding force on the variator roller. An electronic control 102 sends pressure demands to the pressure control valves V1 and V2 to control the variator.

Note that the reaction pressures P1 and P2 in the supply lines do not fall to zero, but are instead maintained at or above a base pressure BP. This is ensured, in the illustrated embodiment, by means of a base pressure regulator valve 104 which receives pressurised fluid from the pump 100 and which modulates its own output, based on feedback of its output pressure through pilot line 106, to maintain it at the base pressure. An accumulator 108 receives the said output and can contribute to flow required to maintain the base pressure during transient events. The output of the base pressure regulator valve 104 is also connectable, via respective one-way valves OW₁ and OW₂, to the supply lines S1 and S2. The one-way valves are oriented to open only if the supply line pressure would otherwise fall below the base pressure.

The diagram contains schematic representations of damper arrangements serving to maintain variator stability. First dampers D1 and D2 are incorporated in the respective supply lines S1 and S2, so that flow to all of the actuators 32 passes through them, and serve to damp a mode of oscillation in which all of the variator rollers move in phase with one another. Second dampers C1 and C2 are incorporated in branch lines leading to an individual actuator 32 and serve to damp another possible mode of oscillation in which the variator rollers move out of phase with one another.

One-way output valves OU₁ and OU₂ are connected to the respective supply lines S1 and S2 to permit flow only out of the supply lines and not into them. The outputs of the one-way output valves are connected together so that their combined output H is the higher of the supply line pressures P1 and P2.

Arrangements for control of traction load are represented by boxes in Figure 2. A switching valve arrangement 110 receives:-
- the base pressure (BP) through a connection 112 to the base pressure regulator valve 104,
- the higher of the two pressures applied to the actuator pistons 31. This is taken from a "higher-pressure-wins" valve arrangement 114 which is connected to the two sides of the actuator piston 31 and which selects the higher pressure and supplies it through output 116. Since this is the pressure that is adjusted to control the variator it will be referred to below as the "control pressure".

The base pressure BP and the control pressure CP form signals upon which control of the traction load is based. They are connected to a traction control valve arrangement 119 through the switching valve arrangement 110. The traction control valve arrangement 119 also receives a supply of fluid at the higher of the supply line pressures, H, and modulates this to form a traction load pressure TP, as will be explained below.

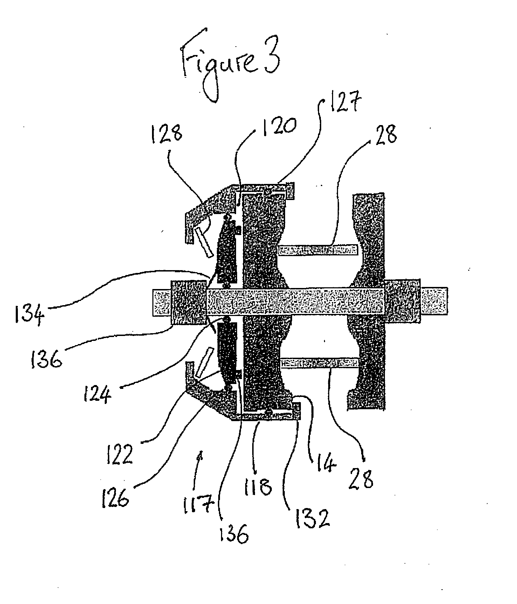

Figure 3 represents a traction load actuator 117 constructed according to the invention. The actuator serves to exert a biasing force on variator disc 14, as in the variator of Figure 1, to urge the variator discs into engagement with the variator rollers 28, and so provide disc/roller traction. The variator disc 14 is received in a movable annular cylinder part 118, closing one end of a cylinder defined by it. A traction load working chamber 120 is formed between the variator disc 14 and a reaction plate 122 which is mounted on, and movable along, variator shaft 16. The reaction plate 122 engages the shaft 16 through a seal 124, and also engages a bore of the cylinder part 118 through a further seal 126. Still a further seal 127 between the variator disc 14 and the cylinder part 118 resists egress of fluid in that region. The reaction plate 122 acts as a piston in the cylinder part 118. A relief spring 128 is pre-stressed between a shoulder 130 on the cylinder part 118 and the rear of the reaction plate 122 (the surface that faces away from the traction load working chamber 120). In the illustrated embodiment the relief spring is a conical spring of a type often referred to as a "Belleville washer". During assembly of the variator, the disc 14, reaction plate 122, cylinder part 118 and relief spring 128 form a self-contained sub assembly and are retained together by a circular spring clip 132. The force exerted by the actuator formed by these components is reacted through a pre-load spring 134. More specifically, the pre-load spring 134 acts on the rear of the reaction plate 122, being pre-stressed by means of a collar 136 on the variator shaft 16.

The operation of the traction load actuator 117 will now be explained. The pre-load spring 134 provides an initial minimum level of traction load upon start-up of the transmission. Upon start-up, there will typically be no hydraulic pressure in the traction load working chamber 120. Pre-load spring 134, acting through reaction plate 122 and through abutments 136 between reaction plate 122 and disc 14, provides the traction load needed in this initial phase of operation. It also prevents the traction load from falling below a minimum value (equal to the pre-load spring's force). For much of the time, during operation of the transmission, traction load pressure TP in the traction load working chamber 120 overcomes the pre-load spring 134, separating abutments 136 from disc 14, so that the pre-load spring 134 does not contribute to the traction load. Instead, traction load is determined by:
- the traction pressure TP, which acts on the variator disc 14 to create the traction load, and
- the relief spring 128, whose force is referred through the cylinder part 118 and its spring clip 132 and acts in opposition to the traction load pressure, reducing the traction load. The purpose of the relief spring 128 will be clarified below.

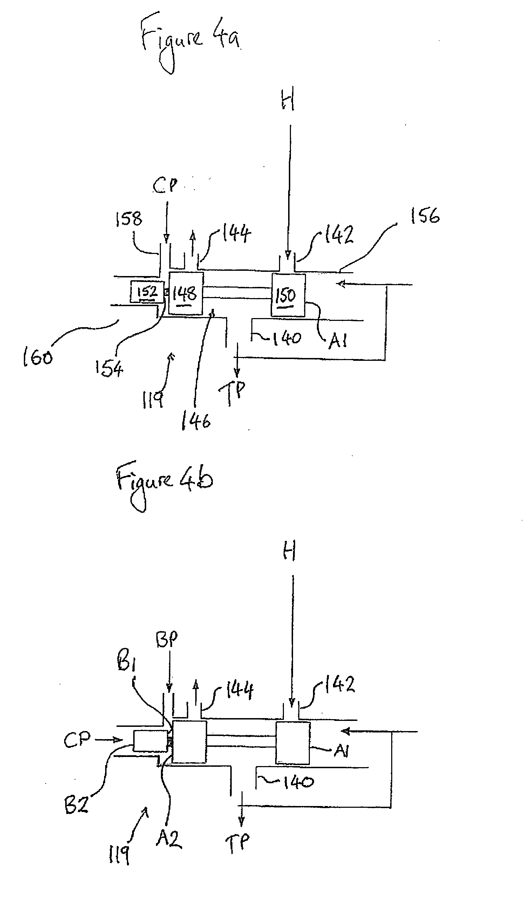

Refer now to Figures 4a and 4b, which are schematic representations of a traction control valve 119 whose purpose is to control the traction load pressure TP. The traction control valve 119 receives a high pressure supply, which in the illustrated embodiment is the output H of the one-way output valves OU₁ and OU₂, although in other embodiments it could for example be taken more directly from a pump. The traction load pressure TP output from the traction control valve 119 through output port 140 is applied to the traction load working chamber 120 (see Figure 3) and so determines the traction load. In response to pilot pressure signals formed by the base pressure BP and the control pressure CP, the traction control valve 119 is able to:
- connect port 142 (receiving the high pressure H) to output port 140, to boost traction load pressure TP,
- connect exhaust port 144 to output port 140, to relieve traction load pressure TP, or
- close both inlet port 142 and output port 140, to maintain traction load pressure TP.

In the illustrated example the valve's ports are controlled by a movable spool 146 having two heads 148, 150 for opening/closing the exhaust and inlet ports respectively, a passage for through-flow of fluid being defined between the spool's heads 148, 150. The traction control valve 119 also has a dart 152 which is movable independently of the spool 146 but is able to exert a force upon the spool through an abutment 154.

There are three pilot pressure ports through which pressure signals can be applied to control the valve:
- first pilot pressure port 156, through which pressure can be applied to an area A₁ of the spool 146, to urge it to the left as viewed,
- second pilot pressure port 158, pressure through which acts both upon an area A₂ of the spool 146 (and in the illustrated embodiment A₁ equals A₂), to urge the spool to the right, as viewed, and upon an area B₁ of the dart, urging it to the left, and
- third pilot pressure port 160, pressure through which acts on an area B₂ of the dart 152 (and in the illustrated embodiment B₁ equals B₂) to urge the dart to the right, into engagement with the spool 146.

The switching valve arrangement 110 is used to selectively connect the pilot pressures BP and CP to the pilot pressure ports in different configurations, illustrated respectively in Figures 4a and 4b. In both configurations the traction load pressure TP (i.e. the output pressure of the traction control valve 119) is led to the first pilot pressure port 156, forming a feedback signal.

In figure 4a the traction load pressure TP is opposed only by the control pressure CP, acting through the second pilot pressure port 158. Third pilot pressure port 160 is exhausted and the dart 152 thus has no effect on the valve's output pressure. The traction control valve 119 adjusts traction load pressure TP to balance control pressure CP, and since valve working areas A₁ and A₂ are equal in this example TP and CP are substantially equal.

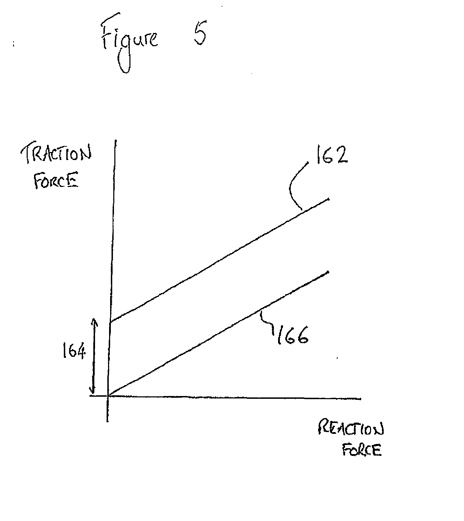

Recall that it is desired to maintain a substantially constant variator traction coefficient - i.e. a substantially constant ratio of the reaction force exerted by actuator 32 to the traction load exerted by traction load actuator 117. Note also that the reaction force is not proportional to the control pressure CP. Rather, it is proportional to the difference between the control pressure CP and the (substantially constant) base pressure BP. In Figure 5, line 162 represents the relationship between reaction force (on the horizontal axis) and the force exerted on variator disc 14 by the resultant pressure in the traction load working chamber 120. Offset 164, created by the effect of the base pressure BP, implies that traction load would not be proportional to reaction force as required. The problem is overcome, however, by the relief spring 128, whose effect is to reduce the traction load by a constant amount equal to the offset 164. The resultant reaction force/traction load characteristic 166 is a substantially straight line passing through origin, in this example, implying that traction load is truly proportional to reaction force, as required.

Now consider Figure 4b. Here the base pressure BP is applied through the second pilot pressure port 158 to the spool's working area A₂ and to the dart's working area B₁. The control pressure CP is applied through the third pilot pressure port 160 to the dart's working area B₂. Hence the spool 146 continues to suffer a force BP x A₂ due to the base pressure, the effect of which on traction load pressure TP continues to be cancelled out by the relief spring 128. The dart 152 exerts a force on the spool 146 which is equal to B₁ x (CP-BP), i.e. it is proportional to the reaction force. Hence this configuration once more provides a constant traction coefficient, but the traction load produced for any given reaction force differs from that provided by the Figure 4a arrangement by a factor A₁/B₁, due to the different areas on which the control pressure CP acts in the two configurations.

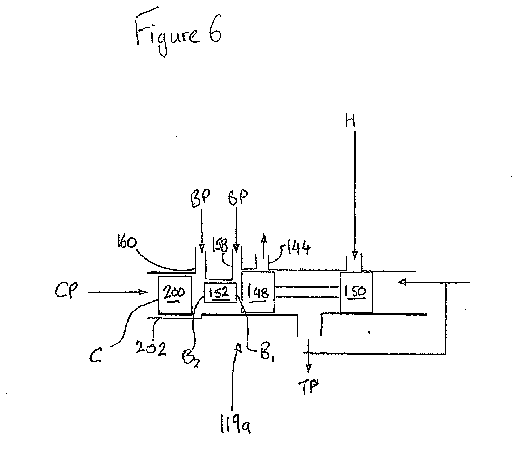

The illustrated example provides two possible values of variator traction coefficient. Figure 6 shows an alternative version of the traction control valve 119a which provides three possible values. It differs from the first version in having a second dart 200 and a fourth pilot pressure port 202. Hence the same two configurations of connections described with reference to Figure 4 can be implemented with the Figure 6 version of the valve, with port 202 being exhausted in both cases, while the third valve of traction coefficient is provided by the illustrated configuration, in which base pressure BP acts on both ends of the first dart 152 (producing no net force) and the control pressure CP, acting through the fourth pilot pressure port 202 on area C of the second dart 200, creates a force C x CP on the spool 146. Since area C is different from area B₂, a different traction coefficient results. Further darts could be provided to give further discrete values of traction coefficient.

## Claims

1. A traction control arrangement for a variator having a pair of races, at least one roller (28) which is arranged to engage both races and to transfer drive from one race to the other, the at least one roller (28) being movable to enable the speed of one race to be varied relative to the speed of the other race, a hydraulic traction load actuator (15) which receives a hydraulic traction load pressure and in response urges the races and the at least one roller into engagement to provide traction between them, and at least one hydraulic roller control actuator (32) arranged to receive opposed first and second reaction pressures and in response to apply a reaction force to the roller,
the traction control arrangement comprising a traction control valve (119) which controls the traction load pressure and which is operable in at least two modes
a first mode in which it receives (a) a first pilot pressure signal corresponding to the traction load pressure (TP) and (b) a second pilot pressure signal corresponding to the higher of the first and second reaction pressures (P₁,P₂), and in which it controls the traction load pressure in response to the difference between the first and second pilot pressure signals; and
a second mode,
a relationship between traction load pressure and reaction force being different in the two modes, **characterized in that** in the second mode the traction control valve (119) receives (a) a first pilot pressure signal corresponding to the traction load pressure (TP), (b) a second pilot pressure signal corresponding to the higher of the first and second reaction pressures (P₁, P₂) and (c) a third pilot pressure signal corresponding to the lower of the first and second reaction pressures (P₁,P₂), and controls the traction load pressure as a function of the first, second and third pilot pressure signals.

2. A traction control arrangement as claimed in claim 1 wherein the traction control valve (119) has a valve member (146) which is movable to open and close a connection between a traction load supply port (140) and a pressure source (H), thereby to control the traction load pressure.

3. A traction control arrangement as claimed in claim 2 wherein the traction control valve further comprises a dart (152) which is movable independently of the valve member but is arranged, when subject to suitable hydraulic pressure, to apply a force to the valve member to influence its position.

4. A traction load arrangement as claimed in claim 3 wherein the dart (152) has first and second working faces which, in the second mode, are subject respectively to the lower and the higher of the first and second reaction pressures so that the dart applies to the valve member a force which is a function of the said reaction pressures.

5. A traction control arrangement as claimed in claim 3 wherein the valve member (146) has first and second opposed valve member working faces, and the dart (152) has opposed first and second dart working faces, and in which:
in the first mode, the traction load pressure acts upon the first valve member working face and the higher of the first and second reaction pressures acts upon the second valve member working face, and
in the second mode the traction load pressure acts upon the first valve member working face, the lower of the first and second reaction pressures acts upon the second valve member working face, and the first and second working faces of the dart (152) are subject respectively to the lower and the higher of the first and second reaction pressures, so that the dart (152) applies to the valve member (146) a force which is a function of the said reaction pressures.

6. A traction control arrangement as claimed in claim 5 in which the first and second working faces of the dart (152) have equal areas so that the force applied by the dart (152) is proportional to the difference between the first and the second reaction pressures.

7. A traction control arrangement as claimed in any of claims 3 to 6 in which the traction control valve (119) additionally comprises a second dart (200) and in which the traction control arrangement is operable in a third mode to provide a third alternative relationship between traction load pressure and reaction force.

## Patentansprüche

1. Zugkraftsteuerungsanordnung für einen Variator mit einem Paar von Laufscheiben, wenigstens einer Rolle (28), welche dafür eingerichtet ist, mit beiden Laufscheiben in Eingriff zu stehen und eine Antriebskraft von einer Laufscheibe auf die andere zu übertragen, wobei die wenigstens eine Rolle (28) verschiebbar ist, um eine Veränderung der Drehzahl einer Laufscheibe in Bezug auf die Drehzahl der anderen Laufscheibe zu ermöglichen, einem hydraulischen Zugkraftlastaktuator (15) welcher einen hydraulischen Zugkraftlastdruck empfängt und in Reaktion darauf die Laufscheiben und die wenigstens eine Rolle in Eingriff bringt, um eine Zugkraft zwischen diesen bereitzustellen, und wobei wenigstens einem hydraulischen Rollensteuerungsaktuator (32), der dafür eingerichtet ist, einen entgegenwirkenden ersten und zweiten Reaktionsdruck aufzunehmen und in Reaktion darauf eine Reaktionskraft auf die Rolle auszuüben,
wobei die Zugkraftsteuerungsanordnung ein Zugkraftsteuerungsventil (119) aufweist, welches den Zugkraftlastdruck steuert, und welches in wenigstens zwei Betriebsarten betrieben werden kann,
einer ersten Betriebsart, in welcher es (a) ein dem Zugkraftlastdruck (TP) entsprechendes erstes Steuerdrucksignal empfängt, und (b) ein dem höheren von dem ersten und zweiten Reaktionsdruck (P1, P2) entsprechendes zweites Steuerdrucksignal, und in welcher es den Zugkraftlastdruck in Reaktion auf die Differenz zwischen dem ersten und zweiten Steuerdrucksignal steuert; und
einer zweiten Betriebsart, wobei eine Beziehung zwischen Zugkraftlastdruck und Reaktionskraft in den zwei Betriebsarten unterschiedlich ist,
**dadurch gekennzeichnet, dass**
in der zweiten Betriebsart das Zugkraftsteuerungsventil (119), (a) ein dem Zugkraftlastdruck (TP) entsprechendes erstes Steuerdrucksignal, (b) ein dem höheren von dem ersten und zweiten Reaktionsdruck (P1, P2) entsprechendes zweites Steuerdrucksignal und (c) ein dem niedrigeren von dem ersten und zweiten Reaktionsdruck (P1, P2) entsprechendes drittes Steuerdrucksignal empfängt, und den Zugkraftlastdruck als eine Funktion des ersten, zweiten und dritten Steuerdrucksignals steuert.

2. Zugkraftsteuerungsanordnung nach Anspruch 1, wobei das Zugkraftsteuerungsventil (119) ein Ventilelement (146) besitzt, welches verschiebbar ist, um eine Verbindung zwischen der Zugkraftlastzuführungsöffnung (140) und einer Druckquelle (H) zu öffnen und zu schließen, um dadurch den Zugkraftlastdruck zu steuern.

3. Zugkraftsteuerungsanordnung nach Anspruch 2, wobei das Zugkraftsteuerungsventil (119) ferner einen Pfeilbolzen (152) aufweist, welcher unabhängig von dem Ventilelement verschiebbar aber so angeordnet ist, dass er, wenn er einem geeigneten hydraulischen Druck ausgesetzt ist, eine Kraft auf das Ventilelement ausübt, um dessen Position zu beeinflussen.

4. Zugkraftsteuerungsanordnung nach Anspruch 3, wobei der Pfeilbolzen (152) eine erste und zweite Arbeitsfläche hat, welche in der zweiten Betriebsart dem niedrigeren bzw. dem höheren von dem ersten und zweiten Reaktionsdruck dergestalt ausgesetzt sind, dass der Pfeilbolzen auf das Ventilelement eine Kraft ausübt, welche eine Funktion der Reaktionsdrücke ist.

5. Zugkraftsteuerungsanordnung nach Anspruch 3, wobei das Ventilelement (146) eine erste und zweite gegenüberliegende Ventilelementarbeitsfläche hat, und der Pfeilbolzen (152) eine gegenüberliegende erste und zweite Kolbenarbeitsflächen hat, und in welcher:
in der ersten Betriebsart der Zugkraftlastdruck auf die erste Arbeitsfläche des Ventilelementes wirkt und der höhere von dem ersten und zweiten Reaktionsdruck auf die zweite Arbeitsfläche des Ventilelementes wirkt, und
in der zweiten Betriebsart der Zugkraftlastdruck auf die erste Arbeitsfläche des Ventilelementes wirkt, der niedrigere von dem ersten und zweiten Reaktionsdruck auf die zweite Arbeitsfläche des Ventilelementes wirkt, und die erste und zweite Arbeitsfläche des Pfeilbolzens (152) dem niedrigeren bzw. dem höheren von dem ersten und zweiten Reaktionsdruck dergestalt ausgesetzt sind, dass der Pfeilbolzen (152) auf das Ventilelement (146) eine Kraft ausübt, welche eine Funktion der Reaktionsdrücke ist.

6. Zugkraftsteuerungsanordnung nach Anspruch 5, in welcher die erste und die zweite Arbeitsfläche des Pfeilbolzens (152) gleiche Flächen dergestalt haben, dass die durch den Pfeilbolzen (152) ausgeübte Kraft proportional zu der Differenz zwischen dem ersten und zweiten Reaktionsdruck ist.

7. Zugkraftsteuerungsanordnung nach einem der Ansprüche 3 bis 6, in welcher das Zugkraftsteuerungsventil (119) zusätzlich einen zweiten Pfeilbolzen (200) aufweist, und in welcher die Zugkraftsteuerungsanordnung in einer dritten Betriebsart betrieben werden kann, um eine dritte alternative Beziehung zwischen Zugkraftlastdruck und Reaktionskraft bereitzustellen.

## Revendications

1. Agencement de contrôle de traction pour un variateur ayant une paire de chemins de roulement, au moins un galet (28) qui est agencé pour s'engager dans les deux chemins de roulement et pour transférer l'entraînement d'un chemin de roulement à l'autre, l'au moins un galet (28) étant mobile pour permettre de faire varier la vitesse d'un chemin de roulement par rapport à la vitesse de l'autre chemin de roulement, un actionneur de charge de traction hydraulique (15) qui reçoit une pression de charge de traction hydraulique et en réponse pousse les chemins de roulement et l'au moins un galet en engagement pour fournir une traction entre eux, et au moins un actionneur de commande de galet hydraulique (32) agencé pour recevoir des première et deuxième pressions de réaction opposées et appliquer en réponse une force de réaction au galet,
l'agencement de contrôle de traction comprenant une soupape de contrôle de traction (119) qui commande la pression de charge de traction et qui est manoeuvrable dans au moins deux modes,
un premier mode dans lequel elle reçoit (a) un premier signal de pression pilote correspondant à la pression de charge de traction (TP) et (b) un deuxième signal de pression pilote correspondant à la plus grande des première et deuxième pressions de réaction (P₁, P₂), et dans lequel elle commande la pression de charge de traction en réponse à la différence entre les premier et deuxième signaux de pression pilote ; et un deuxième mode,
une relation entre la pression de charge de traction et la force de réaction étant différente dans les deux modes, **caractérisé en ce que** dans le deuxième mode la soupape de contrôle de traction (119) reçoit (a) un premier signal de pression pilote correspondant à la pression de charge de traction (TP), (b) un deuxième signal de pression pilote correspondant à la plus grande des première et deuxième pressions de réaction (P₁, P₂), et (c) un troisième signal de pression pilote correspondant à la plus petite des première et deuxième pressions de réaction (P₁, P₂), et commande la pression de charge de traction en fonction des premier, deuxième et troisième signaux de pression pilote.

2. Agencement de contrôle de traction selon la revendication 1, dans lequel la soupape de contrôle de traction (119) a un organe de soupape (146) qui est mobile pour ouvrir et fermer une connexion entre un orifice d'approvisionnement en charge de traction (140) et une source de pression (H), afin de commander la pression de charge de traction.

3. Agencement de contrôle de traction selon la revendication 2, dans lequel la soupape de contrôle de traction comprend en outre un aiguillon (152) qui est mobile indépendamment de l'organe de soupape mais est agencé, lorsqu'il est soumis à une pression hydraulique appropriée, pour appliquer une force à l'organe de soupape pour influencer sa position.

4. Agencement de contrôle de traction selon la revendication 3, dans lequel l'aiguillon (152) a des première et deuxième faces opérationnelles qui, dans le deuxième mode, sont soumises respectivement à la plus petite et à la plus grande des première et deuxième pressions de réaction de sorte que l'aiguillon applique sur l'organe de soupape une force qui dépend desdites pressions de réaction.

5. Agencement de contrôle de traction selon la revendication 3, dans lequel l'organe de soupape (146) a des première et deuxième faces opérationnelles d'organe de soupape opposées, et l'aiguillon (152) a des première et deuxième faces opérationnelles d'aiguillon opposées, et dans lequel :
dans le premier mode, la pression de charge de traction agit sur la première face opérationnelle d'organe de soupape et la plus grande des première et deuxième pressions de réaction agit sur la deuxième face opérationnelle d'organe de soupape, et
dans le deuxième mode, la pression de charge de traction agit sur la première face opérationnelle d'organe de soupape, la plus petite des première et deuxième pressions de réaction agit sur la deuxième face opérationnelle d'organe de soupape, et les première et deuxième faces opérationnelles de l'aiguillon (152) sont soumises respectivement à la plus petite et à la plus grande des première et deuxième pressions de réaction, de sorte que l'aiguillon (152) applique sur l'organe de soupape (146) une force qui dépend desdites pressions de réaction.

6. Agencement de contrôle de traction selon la revendication 5, dans lequel les première et deuxième faces opérationnelles de l'aiguillon (152) ont des surfaces égales de sorte que la force appliquée par l'aiguillon (152) est proportionnelle à la différence entre les première et deuxième pressions de réaction.

7. Agencement de contrôle de traction selon l'une quelconque des revendications 3 à 6, dans lequel la soupape de contrôle de traction(119) comprend en outre un deuxième aiguillon (200) et dans lequel l'agencement de contrôle de traction est manoeuvrable dans un troisième mode pour fournir une troisième relation alternative entre la pression de charge de traction et la force de réaction.
